# EUROPEAN PATENT SPECIFICATION

(11) **EP 0 629 852 B1**
(45) Date of publication and mention of the grant of the patent: **11.08.1999**
(21) Application number: 94107564.0
(22) Date of filing: 16.05.1994
(51) Int. Cl.: G01N 25/72

(54) **A method and an apparatus for flaw detection**
Verfahren und Vorrichtung zur Fehlstellenfeststellung
Méthode et appareil pour la détection de défauts

(30) Priority: 17.05.1993 JP 13933793; 08.11.1993 JP 30343093
(43) Date of publication of application: 21.12.1994
(73) Proprietor: DAIDO TOKUSHUKO KABUSHIKI KAISHA, Naka-ku Nagoya-shi Aichi-ken (JP)
(72) Inventor: Endo, Toshio, Nishikamo-gun, Aichi-ken (JP); Yagi, Tomikazu, Nishikasugai-gun, Aichi-ken (JP); Yamada, Ryuzo, Aichi-ken (JP); Ishikawa, Nobuo, Aichi-ken (JP); Yano, Taizo, Nagoya-shi, Aichi-ken (JP)
(74) Representative: Winter, Brandl, Fürniss, Hübner, Röss, Kaiser, Polte, Kindermann Partnerschaft

(56) References cited:
- DE-A- 3 227 820
- GB-A- 2 109 927
- US-A- 3 504 524
- US-A- 4 247 306

## Description

### FIELD OF INVENTION

This invention relates to a method of and an apparatus for detecting flaws existing on a member to be inspected such as a steel member.

### BACKGROUND OF THE INVENTION

For detecting if flaws (including cracks) exist on a steel member, there is a known technique wherein the surface region of the member is heated by high frequency induction heating, and the flaws on the surface of the member are detected by measuring the surface temperature of the member with a radiation thermometer. This technique is disclosed in Japanese Provisional Publication No. 298846/90 and in corresponding United States Patent No. 5069005. As shown more specifically in Fig. 23, the surface region of the member W to be inspected is heated by using a high frequency induction heating coil 101 during transportation. and after that, the temperature distribution on the surface of the member W is measured with a radiation thermometer 102 arranged just next to the coil 101. If a flaw exists on the surface, the temperature at the flaw is different from the sound part (higher or lower than the surroundings, for example) so that the flaw is detected according to this temperature difference.

Although a member covered with scale can be adopted for the flaw detection mentioned above, the member is treated by shot blasting as a pretreatment for removing the scale prior to the flaw detection. The surface of the member W becomes a glossy one (shot surface) after the shot blasting and reduces the emissivity ε so that the temperature difference ΔT detected by the radiation thermometer 102, i.e., the level of the flaw signal decreases. Furthermore, handling marks (for example, marks due to roller rubbing, bar applying or wire applying) are easily formed on the surface of the member, and these marks exhibit mirror-like appearance which is much more glossy than the shot surface so that the emissivity ε decreases significantly thereat. The part of lower emissivity ε is detected as a lower temperature part with the radiation thermometer 102. Therefore, it may be difficult to judge whether the low temperature part detected by the radiation thermometer 102 shows a real flaw or a handling mark. This may cause a false detection of regarding a handling mark as a real flaw and may lead to decrease in the detection accuracy.

When the flaw detection is performed on a member covered with scale, the handling marks by rolls, bars, wires, and so on, mentioned above may appear as parts of scale peeling off. The emissivity is smaller also for such parts than for the surroundings (scale), and the temperature measured with the radiation thermometer becomes lower thereat. This situation is fundamentally the same as that of the handling marks formed on the shot surface.

GB-A-2 109 927 discloses a method of detecting flaws existing on the surface of a member to be inspected, said method comprising the steps of providing said surface with a coating of water or an aqueous liquid which may have added thereto a component to reduce surface tension or the freezing point, said coating taking influence on the surface emissivity. The surface region of the member under test is heated by high frequency induction heating and the temperature distribution on the surface of the heated member is measured. Flaws can be detected from the temperature distribution on the surface of the member under test.

US-A-3,504,532 describes a test method making use of a material taking influence on the surface emissivity of a member under test, such material having the form of a coating which is dried and forms a tough layer which adheres tightly to the test surface. The coating in accordance with such known method is preferently a plastic with added material as lamp black or pigments. This layer has to be peeled off the member under test after the measurements.

It is an object of the present invention to enable a high accuracy of flaw detection even in the case that the surface emissivity of the member is not uniform because of handling marks mentioned above. Furthermore, it is an object of this invention to make the flaw detection more easy and reliable by enhancing the total surface emissivity of the member and increasing the flaw signal.

This object, in accordance with the present invention, is achieved by a method having the features of appended claim 1.

Advantageous embodiments and further developments as well as an apparatus for verifying the method are subject matter of claims 2 to 4 and claims 5 to 8, respectively.

One example of the members to be inspected are those having surfaces treated by shot blasting (shot surface), but the members are not limited to such ones, and those covered with scale are also adopted for the flaw detection. Anyway, the powder coating of this invention is effective for making the surface emissivity uniform and increasing the total emissivity when the emissivity is distributing on the surface of the member due to a nonuniformity of gloss, and so on, or when the total emissivity is small because the whole surface of the member is glossy as in the case of a shot surface, and so on.

In the step of covering the member with powder mentioned above, the powder can be deposited on the surface of the member (by using an attractive force of static electricity, and so on) at a very small thickness, and thereby, the surface of the member is covered with the powder so that the surface is partly exposed. The degree of such very thin coverage is, for example, that the exposed part of the surface is observed in a form of dispersed spots when said surface is microscopically observed.

It is preferable to remove the powder deposited on the surface of the member after finishing the measurement of the temperature distribution on the surface. In this powder removing step, the powder deposited on the member is sucked by a vacuum cleaner or blown away by using high pressure air from a nozzle or from a blower.

When the member consists of a non-magnetic material (a non-magnetic stainless steel, and so on), the depth of the electric current permeation of the high frequency induction heating is set to be larger than that of the flaw to be detected in the method of this invention. The flaw is detected according to that the temperature is lower on the parts where flaws exist than on the parts where no flaw exists

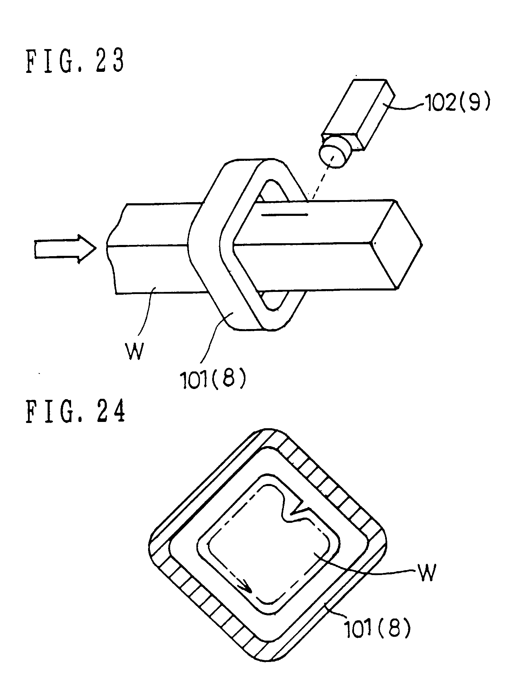

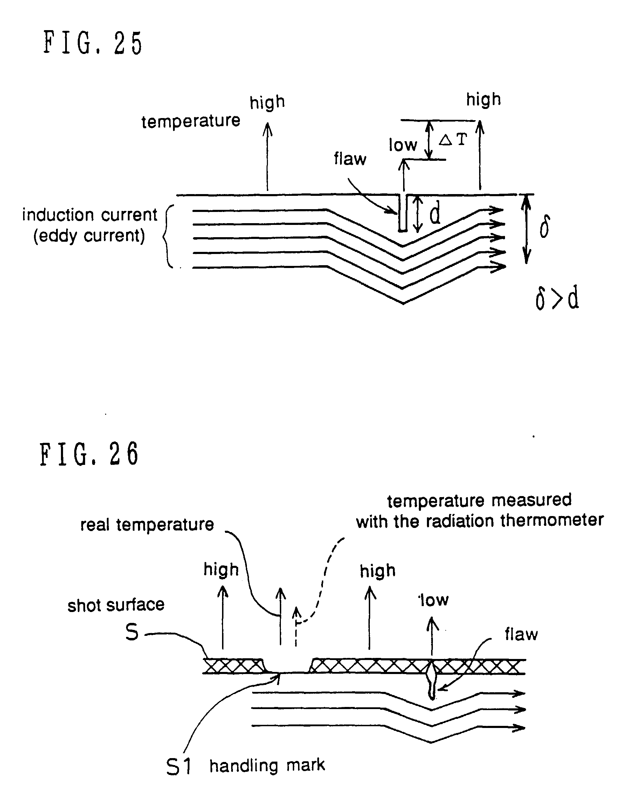

As shown in Fig. 24, an induction current (eddy current) is generated in the surface region of the member W by the induction heating coil 101. When the permeation depth of the induction current (δ) is set to be larger than that of the flaw to be detected (d), the temperature at the flaw, in most of the cases, becomes lower than that of the surroundings since the induction current passes around the flaw thereby causing a reduction of current density thereat, as shown in Fig. 25 (the temperature is conceptually expressed by a length of an upward arrow in Fig. 25). The flaw can be detected by measuring the temperature difference ΔT with the radiation thermometer 102. On the other hand, there may be the case that the temperature at the flaw is higher than the sound part (the part with no flaw) depending upon the morphology of the flaw, for example, in the case of a spot-like flaw or a flaw consisting of spots formed in a row. Particularly, the flaws on the edge portion of a square bar is detected as a high temperature part in most of the cases.

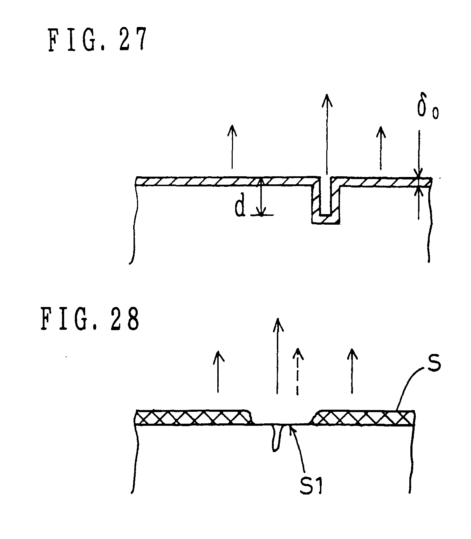

For a magnetic material, the depth of the electric current permeation of high frequency induction heating, δ₀, is usually smaller than that of the flaw to be detected, d, as shown in Fig. 27. Since the electric current density is larger for the flaw part than for the sound part, the heat generated by the induction heating is larger for the flaw part, and the temperature measured by the radiation thermometer 102 becomes higher thereat. In this case, the part where the temperature is higher than its surroundings is to be judged as a flaw. The flaw part should be measured as a high temperature part with the radiation thermometer 102 if the flaw detection principle presented in Fig. 27 is employed, but when the flaw part exists, for example, within a handling mark S1 as shown in Fig. 28, the apparent temperature at the flaw part becomes low because of the small emissivity due to the handling mark. In this case, the flaw detection may result in fail. Such problem, however, can be prevented in this invention since the powder coverage provides a uniform emissivity.

The apparatus of this invention for detecting flaws comprises the features of appended claim 5.

On the transportation line of the apparatus of this invention, a powder removing device can be mounted for removing the powder deposited on the surface of the member. For enhancing the reliability of flaw data, it is important that the radiation thermometer measures the temperature distribution on the surface of the member heated by the high frequency induction heating device while the temperature drop is as small as possible. Therefore, the radiation thermometer is preferable to measure the temperature just after heating or during heating. The high frequency induction heating device is usually equipped with a heating coil into which the member to be inspected is inserted. The temperature measuring point can be arranged, for example, just next to the heating coil on the transporting line or can be located in the heating coil.

For example, the apparatus can be constituted so that the induction heating device comprises a heating coil wherein a cavity (slit, notch, hole, and so on) formed therethrough from the inside to the outside thereof, and the radiation thermometer receives the energy emitted through the cavity. The apparatus can be constructed also so that the radiation thermometer located on the direction inclined to the heating coil which receives the energy emitted through the gap between the neating coil and the member inserted thereinto. Particularly for non-magnetic steels, the absorption of electric power is smaller than for magnetic steels so that the flaw detection is needed to be performed at a low transportation speed. In this case, the temperature measurement is performed preferably in the heating coil for avoiding the temperature drop due to heat conduction, and so on, as small as possible.

In this invention, the surface of the member to be inspected is covered with powder deposited by using static electricity, and so on. Therefore, even if low emissivity parts (such as handling marks) exist, the surface emissivity becomes uniform due to the powder coverage, and the flaw signals are detected in this state so that the probability of false detections can be reduced. Since the shot surface, which has a low emissivity, is enhanced its total emissivity by the powder coating, the temperature difference ΔT can be increased. Furthermore, even if handling marks having lower emissivities than a shot surface exist, the emissivity of the surface becomes uniform due to the powder coating. That is to say, the level of emissivity can be improved with a simultaneous achievement of a uniformity of the emissivity for a shot surface, and so on, so that strong flaw signals and precise results of flaw detection can be obtained.

Since the powder coverage is very thin (for example, in a degree of the surface partly exposed), of course an economical advantage is attained, and besides this, the time and energy for heating the member can be almost the same as in a conventional method since only small heat is needed for heating the powder deposited on the member. Furthermore, such very thin powder coverage is preferable to improve the detection sensitivity because sharp profiles of flaw signals can be obtained, while the profiles of the flaw signals would broaden in the case of a thick coverage due to the heat conduction in the powder layer, and so on.

This powder coverage is performed usually with charging the powder and the member at negative and positive polarities, respectively, according to the same principle as a conventional electrostatic powder coating. The powder is required only to cover the surface of the member, and baking as in a conventional powder coating is not necessary. After the powder coating, the high frequency induction heating and the subsequent temperature measurement with a radiation thermometer are performed, and then flaws are detected according to the temperature distribution on the surface as well as in the method of the prior art. The temperature at the flaw to be detected becomes higher or lower than at the sound part depending upon whether the depth of the permeation of the induction current for heating is larger or smaller than the depth of the flaw to be detected, or depending upon the morphology of the flaw.

In the invention comprising the step or the device for removing the powder, the powder deposited on the member is removed by using a vacuum cleaner, and so on, after finishing the temperature measurement with the radiation thermometer. Therefore, no powder remains on the surface of the member, and bad influence due to the residual powder can be prevented in the subsequent steps. In the invention of measuring the temperature distribution on the surface of the member in the heating coil, a high level of flaw signal is obtained since no temperature drop occurs.

### BRIEF DESCRIPTION OF THE DRAWINGS

In the accompanying drawings:
Fig 1. is a figure conceptually presenting the flaw detection method and the apparatus of one embodiment of this invention;
Fig. 2 is a perspective view specifying the concept of the apparatus presented in Fig. 1;
Fig. 3 is a partial enlarged view of Fig. 2;
Fig. 4 is a figure showing the arrangement of the radiation thermometer in Fig. 2;
Fig. 5 is a figure presenting the principle of electrostatic powder coating;
Fig. 6 is a figure showing the detail of Fig. 5;
Fig. 7 is a figure explaining an example of powder coating;
Fig. 8 is a figure explaining the effect when the powder is deposited at a very small thickness so that the surface of the member is partly exposed;
Fig. 9 is a figure explaining the state that the powder is deposited as thick as the surface is covered completely;
Fig. 10 is a cross-sectional view showing the flaw detection process for the member;
Fig. 11 is a figure showing the relationship between the flaw existing on the member and the temperature measured by the radiation thermometer;
Fig. 12 is a figure showing the case of using a coil wherein a slit is formed in the center portion;
Fig. 13 is a front view of Fig. 12;
Fig. 14 is a side view of Fig. 12;
Fig. 15 is a figure explaining the first example of the case that the temperature measurement for the member is performed in the heating coil;
Fig. 16 is a figure explaining the second example of the same case;
Fig. 17 is a figure explaining the first graph of the case that the temperature measurement is performed for the member in the heating coil.
Fig. 18 is a figure explaining the second graph of the same case;
Fig. 19 is a figure explaining the surface state of the member corresponding to the comparative example and example 1;
Fig. 20 is a graph showing the result of the flaw detection in the comparative example;
Fig. 21 is a graph showing the result of the flaw detection in example 1;
Fig. 22 is a sketch of the micro photograph for the surface of the member in example 1;
Fig. 23 is a perspective view presenting an example of a conventional flaw detection method;
Fig. 24 is a cross-sectional view of the coil for high frequency induction heating in Fig. 23.
Fig. 25 is a figure explaining the relationship between the position of the flaw and the path of the induction current;
Fig. 26 is a figure explaining the energy emission in the case that a handling mark exists on the member;
Fig. 27 is a figure explaining the case that the depth of the electric current permeation in the surface region of the member is smaller than the depth of the flaw;
Fig. 28 is a figure showing the case that a flaw exists within a handling mark.

### DETAILED DESCRIPTION OF THE PREFERABLE EMBODIMENTS

Several embodiments of this invention will now be described with reference to accompanied drawings.

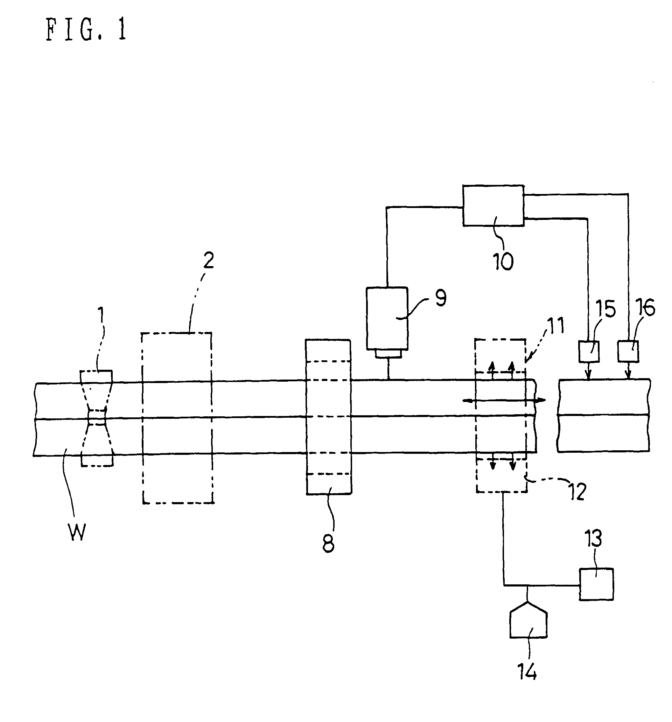

In Fig. 1, the member to be inspected (simply as 'the member', hereinafter) W consists of a non-magnetic material formed in a longitudinal shape having a square cross-section, and its outer surface presents, for example, a shot one as a result of removing the scale thorough shot blasting, and so on. This member W is transported by the transportation line comprising a bobbin-shaped roll 1 for transportation, and so on.

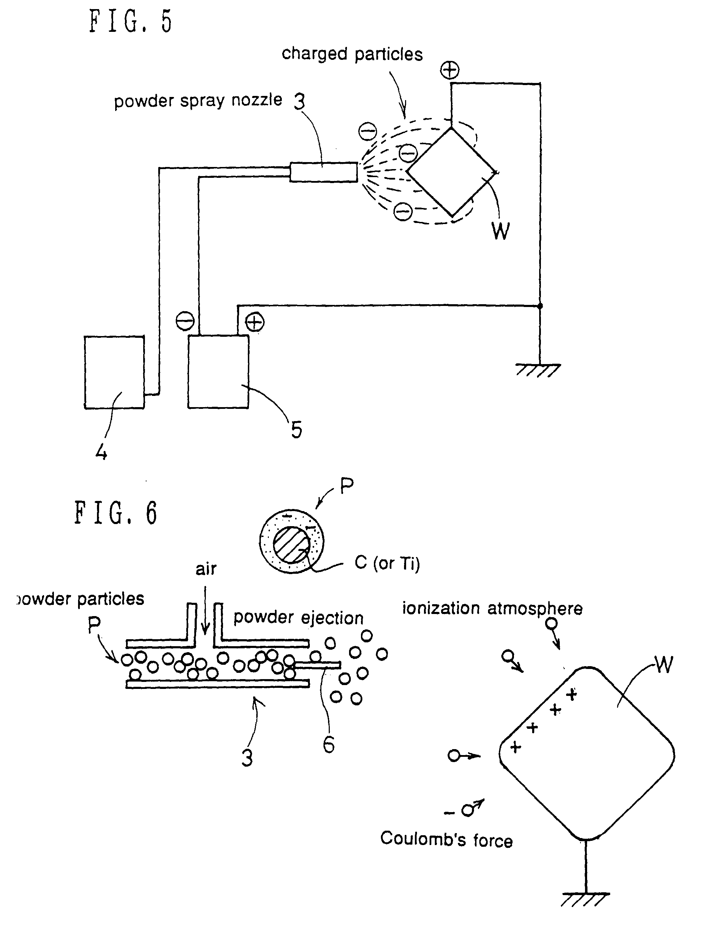

A powder deposition device 2 is mounted on the transportation line. This device deposits designated powder on the surface of the member W by using static electricity, and the principle of the deposition is the same as that of a conventional electrostatic powder coating. Fig. 5 and 6 conceptually show the principle of the powder coating. The designated powder is fed to the a powder spray nozzle 3 from a powder tank 4. A high voltage power generator 5 applies an voltage between the powder spray nozzle 3 and the member W at negative polarity for the spray nozzle 3 and at positive polarity for the member W. The member W is grounded.

As shown in Fig. 6, each powder particle P, for example, has a core consisting of C (carbon) or Ti (titanium) and a shell consisting of resin (for example, acrylic resin, and so on). The average particle diameter is, for example, approximately in the range of 10 - 100 µm. The average diameter of particles is preferably 20 - 50 µm and more preferably 40 µm because of an economical reason. The resin shell of the particles P are negatively charged under an ionization atmosphere formed by the voltage mentioned before (for example, 100 kV with up to 50 µA of current), attracted to the member W in the anode side by the Coulomb's force and cover its surface depositing thereto. The thickness of the powder coverage or deposition can be set so that the surface of the member W is exposed in a form of dispersed spots. More specifically, the thickness of the powder coverage in this case has a very small thickness of approximately 1/3 - 1/6 of the particle diameter if the layer of the powder deposited is assumed to be leveled as having a uniform thickness.

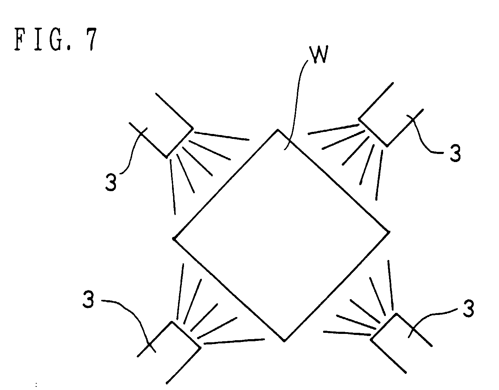

As shown in Fig. 7, for example, the powder spray nozzle 3 can be constituted to be able to cover each surface of the member W with the powder individually along the direction of the transportation. In this case, all surfaces of the member W can be coated simultaneously with the powder also by using four such powder spraying nozzles 3 arranged around the member W. The member W can be coated with the powder by using only one spray nozzle 3 in such way that one half side of the member W is coated by the spray nozzle 3, then the member W is turned and taken back to the upper stream in a reciprocal motion, and finally the other half side is coated by the same nozzle 3.

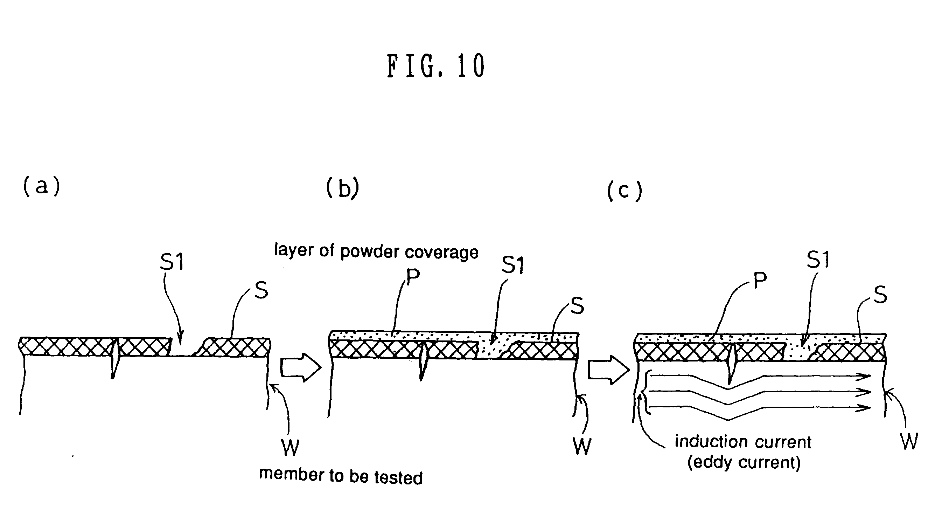

As shown in Fig. 10 (a), for example, if handling marks S1 are existing on the surface S of the member W, the surface emissivity of the member W becomes almost uniform since the whole surface S of the member W, having the handling marks S1 thereon, is coated with the powder particles P (Fig. 10 (b)). There is no limitation upon the color of the powder particles. The powder particles P deposited on the surface S of the member W are bad conductors and maintain negative charge so that the particles never drop from the surface S within a certain period even if the member W is cut from the ground. In Fig. 10, the deposition thickness of the powder particles P is intentionally enlarged because of the convenience for drawing.

When the member W is treated by shot blasting, the surface S becomes a shot surface, and the handling marks S1 formed by rolls, bars, wires, and so on, have mirror-like appearances which are more glossy than the shot surface. On the other hand, when the member W is the one covered with scale before shot blasting, the surface S and the handling marks S1 correspond to the scale and the parts of scale peeling off, respectively. The surface S is, however, a shot one in many cases.

As shown in Fig. 1, a high frequency induction heating device (induction heating device, hereinafter) 8 is mounted on the lower stream of the transportation line. This device is a conventional one for generating an induction current (eddy current) in the surface region of the member W, and formed in an annular shape surrounding the member W as shown in Fig. 24. For the member W consisting of a non-magnetic material, the induction frequency is set so that the depth of current permeation, δ (Fig. 25), is larger than the depth of the flaw to be detected, d.

As shown in Fig. 10 (c), the surface region of the member W is heated by the induction current (eddy current) generated therein. Except for the cases of flaws or cracks on the edge portion of a square bar, and so on, which exhibit higher temperature than in the sound part, the induction current passes around the flaw so that the temperature becomes lower at a flaw than at a sound part in most of the cases. The temperature of the member W increases 20 - 30 °C from ambient temperature by heating as mentioned above, i.e., the member W is heated to 40 - 50 °C when the ambient temperature is 20 °C.

In Fig. 1, a radiation thermometer 9 is arranged just next to the induction heating device 8 and measures the surface temperature of the member W whose surface region is heated. The radiation thermometer 9 is a conventional one which transforms the energy emission from the surface of the member W into an electric output by using sensors and displays this output. A plurality of such radiation thermometers 9 are arranged in the apparatus of Fig. 1, and each thermometer 9 corresponds to one face or one edge of the member W.

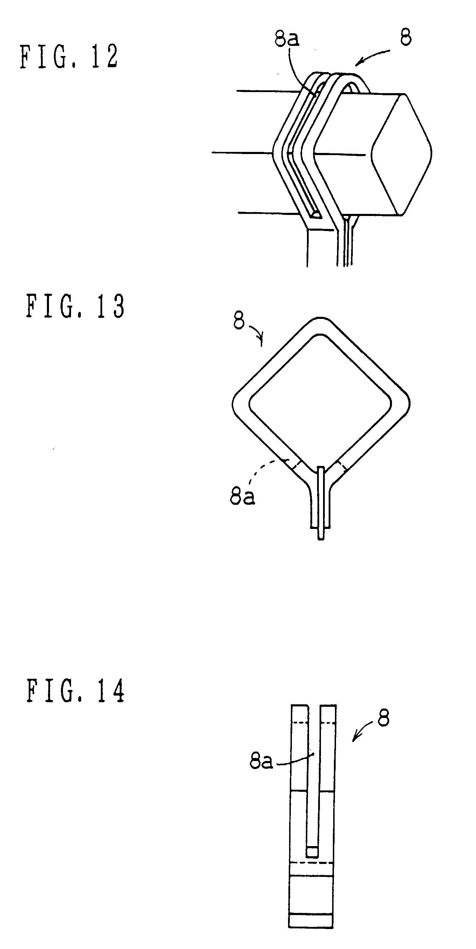

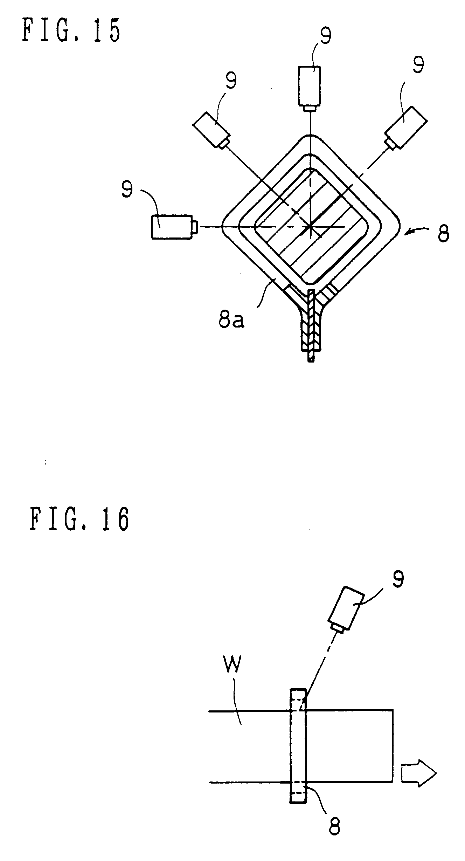

As shown in Figs. 12 - 14, a fork type of heating coil 8, in other words, a coil 8 having a cavity (such as slit 8a) formed therethrough from the inside to the outside thereof can be used. The member W is inserted into the coil 8 and heated therein. The surface temperature of the part heated is measured in the coil 8 by using appropriate number of radiation thermometers 9 through the slit 8a as shown in Fig. 15. Such temperature measurement in the heating coil 8 provides a high accuracy of measurement since almost no temperature drop occurs.

The same effect can be obtained also by using the device presented in Fig. 16. In this case, the radiation thermometer 9 is arranged in the position and direction so that it is directed to the member W in the heating coil 8 through the gap between the heating coil 8 and the member W inserted therein.

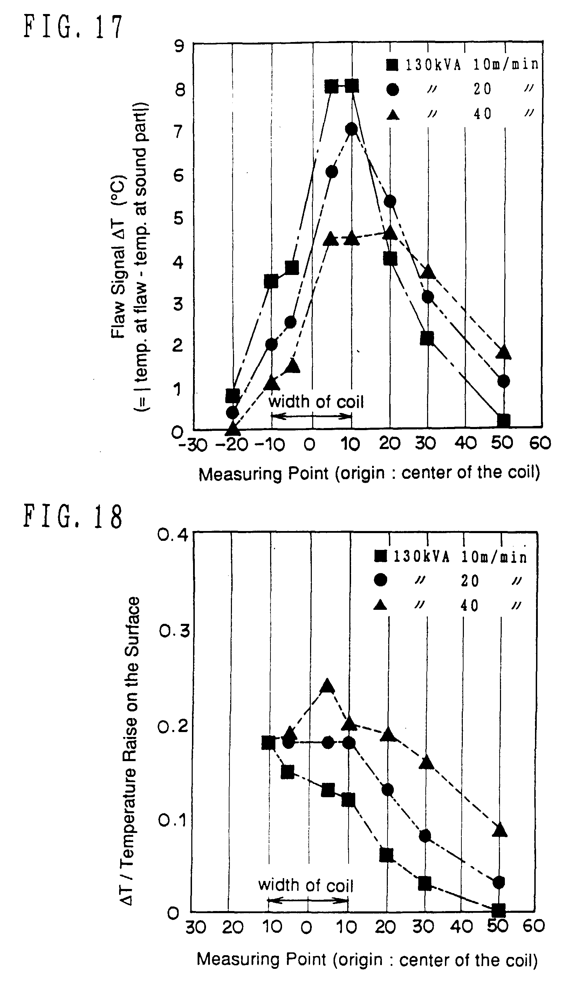

Fig. 17 is a graph presenting the sensitivity (intensity) of the flaw signal ΔT measured along the direction parallel to the center axis of the heating coil 8 which is defined as the origin. The electric power supplied to the heating coil 8 was fixed to 130 kVA, and three transportation speed of the member W (relative to the coil 8) was used, i.e., 10 m/min, 20 m/min and 40 m/min. According to this result, regardless of the transportation speed, it is preferable to measure the temperature at around the region from the center to the exit of the heating coil 8 for enhancing the level of the flaw signal ΔT. Fig. 18 shows the ratio of the flaw signal ΔT to the temperature raise at the surface of the member W (i.e., the degree of how strong flaw signal is obtained against the temperature raise). Good results are obtained within the width of the heating coil 8.

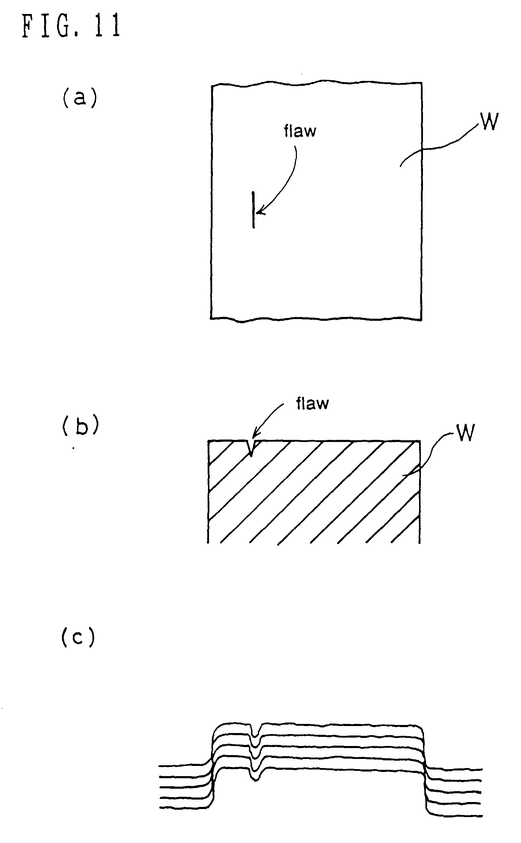

If a flaw exists on the surface of the member W as shown in Fig. 11 (a) and (b), for example, the temperature distribution measured by the radiation thermometer 9 becomes as shown in Fig. 11 (c). Even if a handling mark S1 exists as shown in Fig. 10 (a), the mark S1 is covered with the powder P so that the surface emissivity of the member W becomes almost uniform, and the temperature measured by the radiation thermometer 9 does not exhibit a lower value at the handling mark S1. Therefore, the handling mark S1 is never detected falsely as a flaw.

Although the flaw existence can be judged through a visual observation of the temperature distribution according to the values measured by the radiation thermometer 9, the apparatus can be constituted so that the radiation thermometer 9 is connected with a judging means 10 comprising a computer, and so on, and the apparatus makes a warning signal when the judging means 10 detects a temperature abnormality, with showing the data of the flaw detected such as the location, depth, and so on, on a displaying means as conceptually shown in Fig. 1. The apparatus can comprise a marking device 15 which makes a mark indicating the location of the flaw when receiving a signal from the judging means 10. Furthermore, the apparatus can comprise a grinder 16 which removes detected flaws automatically receiving a signal of flaw location from the judging means 10.

On the lower stream side of the radiation thermometer 9, there are a powder removing device 11 equipped with a suction portion 12 mounted as surrounding the member W, a suction pump 13 connected with the suction portion 12 and a powder collection portion 14. This device removes the powder deposited on the member W by sucking and collects the powder after the temperature measuremen with the radiation thermometer 9. The suction portion 12 of the powder removing device 11 can be mounted movably along the longitudinal direction of the member W.

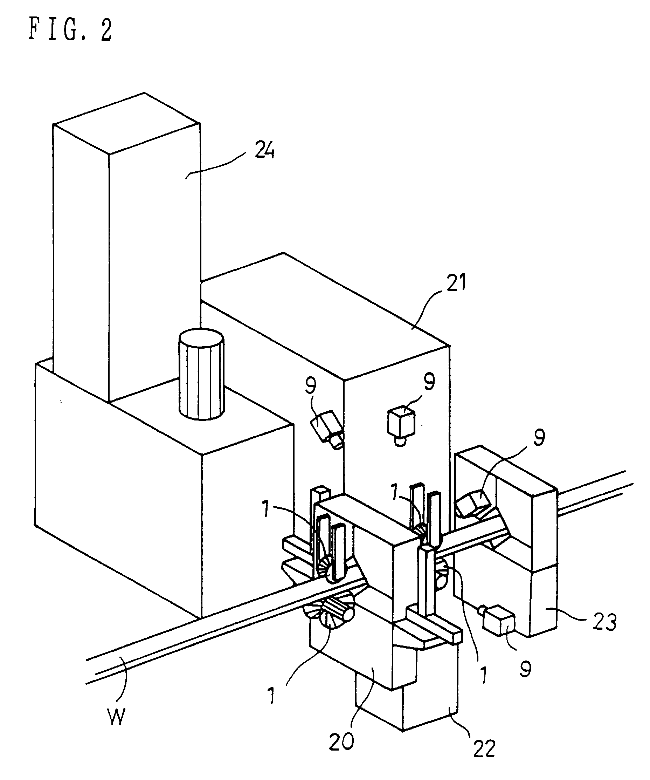

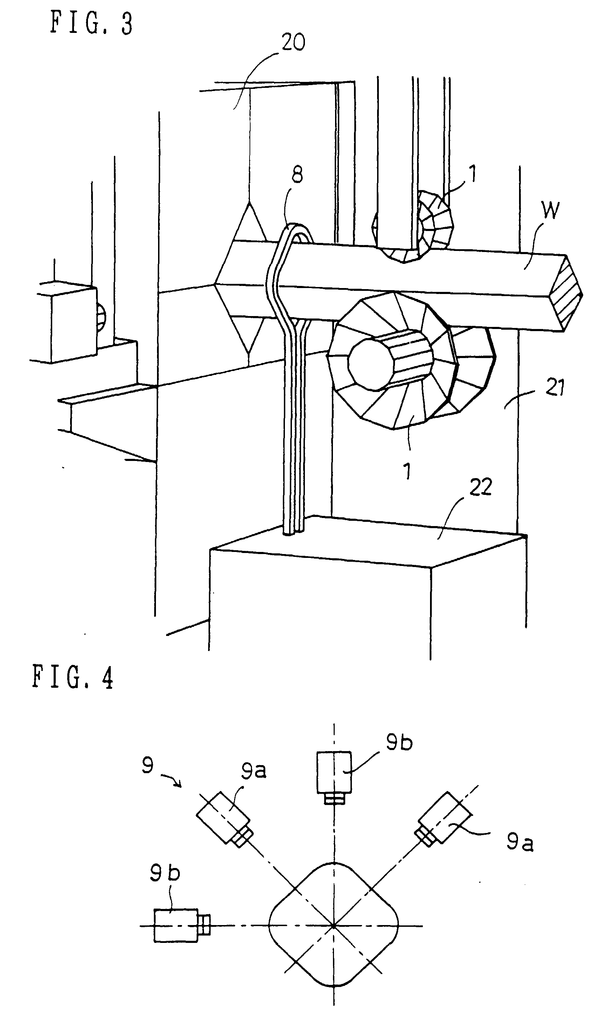

Fig. 2 - 4 shows an apparatus which specifies the conceptual image of the apparatus presented in Fig. 1. In Fig. 2, a steel member W is transported by a plurality of bobbin-shaped rolls 1 in its own longitudinal direction. When the steel member W passes through the powder depositing box 20, the powder is electrostatically deposited on the surface of the member W. In the box 20, there are, for example, two powder spraying guns (not drawn in the figures) each of which corresponds to one face or one edge of the steel member W. On the lower stream side of the box 20, a heating coil 8 as shown in Fig. 3 is mounted, and a high frequency current is supplied thereto from a power source 21 via a coil transformer 22.

During the step of passing through the heating coil 8, the steel member W is heated, and the powder deposited thereon is heated by the heat transfer from the member W. On the lower stream side thereof, a plurality of radiation thermometer 9 are mounted as shown in Fig. 2. These radiation thermometer 9 are arranged, fc example, with two for the faces 9a and two for the edges 9b (i.e, four in total), and measure the temperatures on a half side of the member in one measurement. On the further lower stream, there is a powder collecting box 23 as shown in Fig. 2, which collects the powder from the surface of the steel member W. 24 is a powder collecting device. The flaw detection is performed to one side of the steel member W in one cycle of measurement, and then performed for the other half side in the next cycle after returning the member W to the upper stream or transporting the member W to the further lower stream.

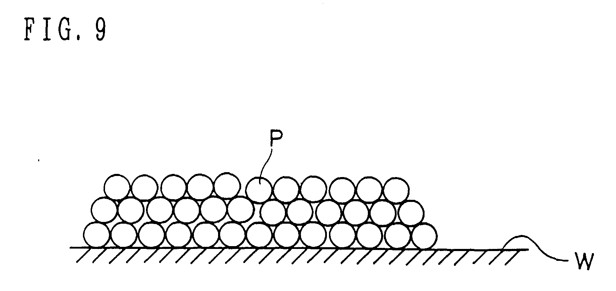

Now, the surface of the member W is assumed to be covered with a plurality of the layers of powder particle P as shown in Fig. 9. The surface is completely covered with the powder layers. In this case, the emissivity of the surface is dominated by that of the powder particle P so that the object to making the emissivity uniform is achieved. A thick powder coverage, however, takes long heating time for sufficiently heating the member along with the powder deposited thereon so that a slow transportation of the member W or an increase in the heat supply per a unit time is demanded when the heating time is held to be constant. Furthermore, a temperature gradient corresponding to a flaw on the member W, such as a trough, diffuses due to the heat conduction through the thick layer of powder P, and the sensitivity may be reduced because of broadening of the flaw signal.

Thus, the thickness of coverage is preferable to be as thin as possible for avoiding the harmful effect mentioned above. If the surface were covered with only one layer of powder particle P, the surface could be covered almost perfectly with the least amount of powder, and the heat conduction could proceed efficiently. Such coverage with only one layer is, however, difficult to be achieved, and the surface may be partly exposed if an ultimately small thickness is pursued. Such state appears to be undesirable, but this partial exposure of the surface rather provides a good result.

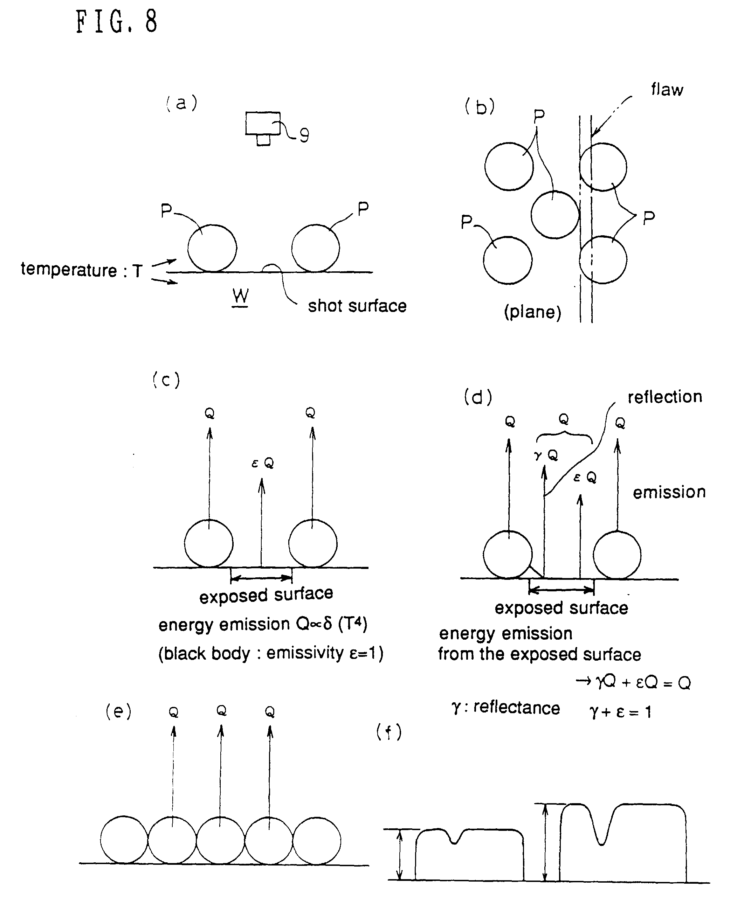

In Fig. 8 (a), (b), and so on, the surface (shot surface, for example) of the member W is assumed to be covered with the powder P at a very small thickness so that the surface is partly exposed. Fig. 8, however, presents only a concept and does not provide a precise expression of the real state of the powder deposition. The average distance between the particles P is not large enough to include whole part of a flaw to be detected (or a handling mark) so that flaws, and so on, exist being hidden under many particles P as shown in Fig. 8 (b). When the member W and the powder particles P are heated to the temperature T as shown in Fig. 8 (a), and when the powder particles P are regarded as black bodies, the energy emission Q is proportional to T⁴ (Stefan-Boltzmann's low). As shown in Fig. 8 (c), the energy emission from the powder particles P is Q (where the emissivity is unity), and that from the surface exposed between the particles P is εQ since the surface is a glossy shot one which has an low emissivity (ε<1).

Although the temperature at the exposed surface is expected to be lower than the surroundings in the discussion above, the energy emitted from the particles P is partly reflected on the exposed surface having a high reflectance because it is a shot one, and this reflected energy (which can be nearly regarded as γQ where γ is the reflectance of the exposed surface) is added to the energy emission εQ mentioned above so that the radiation thermometer 9 detects the sum of these energy, i.e., εQ + γQ as shown only a simple concept in Fig. 8 (d). That is to say, what the surface of a large reflectance is partly exposed means that the reflection of the energy emitted from the particles P becomes considerably large on the exposed surface although the energy directly emitted from the particles P becomes small. In a simple concept for an easy interpretation, the sum of the energy is regarded to be εQ + γQ = Q because ε + γ = 1. This provides a result almost the same as when the surface is completely covered with the powder particles P as shown in Fig. 8 (e), and the particles P are heated instantaneously to the same temperature as the steel member W. The level of the detected temperature for the shot surface is generally increased while the temperature at the flaw part does not changes significantly so that the trough-like flaw signal becomes deeper resulting an enhancement of the sensitivity as shown in Fig. 8 (f).

As is described above, the partial exposure of the surface provides not only an result comparable to the surface completely covered with the powder P, without provoking no inconvenience, but also a new effect of the addition of energy due to the reflection. As long as almost the same effect can be obtained, the powder P is used preferably in an amount as small as possible from view points of time of heating the member W and the intensity of the flaw signals. Therefore, it is recommended to deposit the powder P on the member W so that a part of the surface is exposed intentionally.

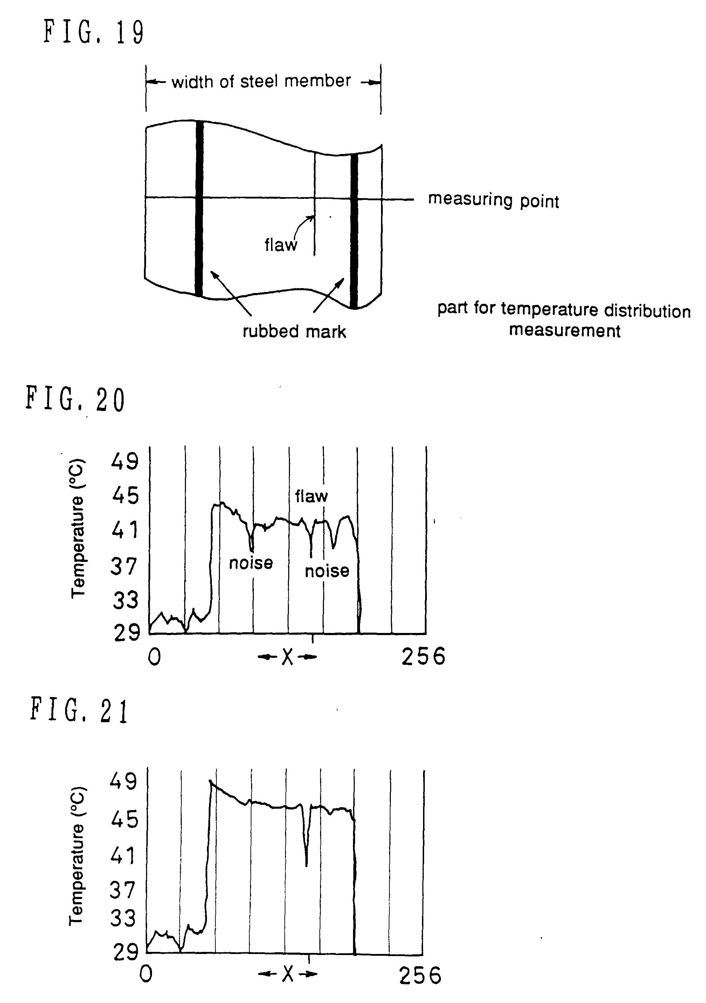

Now, it will be described about the case that the induction heating flaw detection method of this invention is applied to a member having a surface condition as shown in Fig. 19.

### (comparative example)

The member shown in Fig. 19 is subjected to a flaw detection by means of a conventional flaw detection method, and the result is presented in Fig. 20. As it is clear from Fig. 20, the parts of rubbed marks (handling marks) exhibit low temperature as well as the flaw part so that it is difficult to distinguish the flaw and the rubbed marks.

### (example 1)

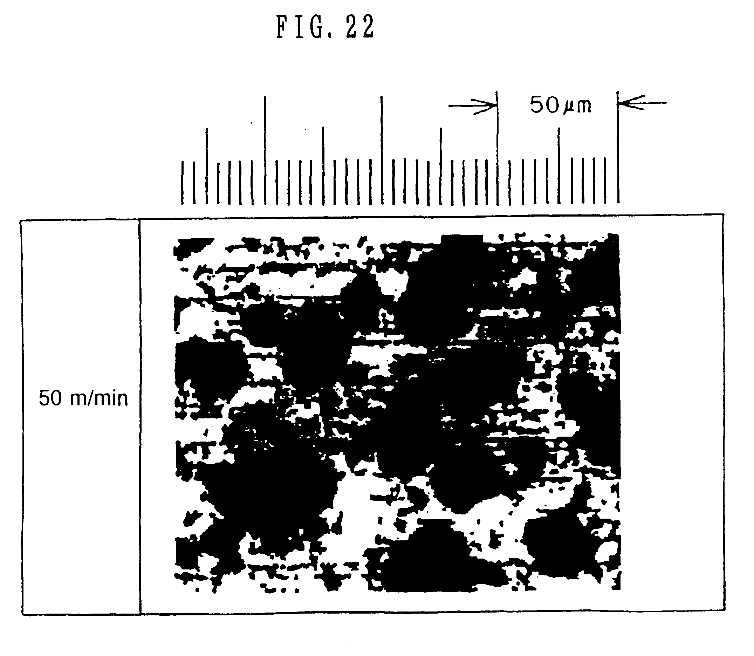

The surface of the member shown in Fig. 19 was covered with powder particles with 40 µm of average diameter. The rate of powder spraying was 50 m/min. The result of the flaw detection for this member is presented in Fig. 21. Fig. 21 shows that only the flaw part is detected as a low temperature part.

Fig. 22 is a sketch of the micro photograph taken for the surface of the member in example 1. The surface is observed to be partly exposed in Fig. 22. The exposed part (white part in the figure) of the surface exhibits a distribution in a form of dispersed spots.

## Claims

1. A method of detecting flaws existing on the surface of a member (W) to be inspected comprising the steps of:
covering the surface of said member to be inspected with powder (P) deposited thereon so that said surface of the member is partly exposed;
heating the surface region of said member by high frequency induction heating (8);
measuring the temperature distribution on said surface of the heated member covered with said powder by using a radiation thermometer (9); and
detecting the flaws on said member according to the temperature distribution on said surface of the member according to the sum of energy emission from particles of said powder covering said surface and energy reflection from said surface exposed between said particles.

2. The method according to claim 1 wherein the thickness of powder coverage on said member (W) is approximately 1/6 to 1/3 of the particle diameter if the layer of the powder deposited is assumed to be levelled as having a uniform thickness.

3. The method according to claim 1 or 2 wherein said surface of the member (W) is observed to be partly exposed in a form of dispersed spots when said surface is microscopically observed.

4. The method according to one of claims 1 to 3 wherein said temperature distribution on said surface is measured with said radiation thermometer (9) at the place where said high frequency induction heating (8) is performed.

5. An apparatus for detecting flaws existing on the surface of a member (W) to be inspected comprising:
a transportation line for transporting the member to be inspected;
a powder deposition device (2) mounted on said transportation line for covering the surface of said member with powder (P);
a high frequency induction heating device (8) mounted on said transportation line for heating the surface region of said member;
a radiation thermometer (9) for measuring the temperature distribution on said surface of the heated member covered with said powder; and
a detecting device (10) for detecting flaws on said member according to temperature distribution on said surface of the heated member covered with said powder;
wherein said powder deposition device (2) deposits powder on the surface of said member so that said surface of the member (W) is partly exposed;
and wherein said detecting device (10) detects flaws on said member according to the sum of energy emission from particles of said powder covering said surface and energy reflection from said surface exposed between said particles by using said radiation thermometer (9).

6. The apparatus according to claim 5 wherein said powder deposition device (2) deposits said powder (P) on said surface of said member (W) so that the thickness of powder coverage on said member is approximately 1/6 to 1/3 of the particle diameter if the layer of the powder deposited is assumed to be levelled as having a uniform thickness.

7. The apparatus according to claim 5 or 6 wherein said high frequency induction heating device (8) is equipped with a heating coil (8) into which said member is inserted, wherein said heating coil (8) has a cavity (8a) formed therethrough from the inside to the outside thereof, and wherein said radiation thermometer (9) measures the temperature distribution on said surface of the member in said heating coil (8) through said cavity (8a).

8. The apparatus according to claim 5 or 6, wherein said high frequency induction heating device (8) is equipped with a heating coil (8) into which said member (W) is inserted, and wherein said radiation thermometer (9) measures the temperature distribution on said surface of the member in said heating coil (8) from an inclined direction through the gap between said heating coil (8) and said member (W) inserted thereinto.

## Patentansprüche

1. Ein Verfahren zum Erkennen von Fehlerstellen, welche auf der Oberfläche eines zu untersuchenden Bauteiles (W) vorhanden sind, mit den folgenden Schritten:
Bedecken der Oberflächen des zu untersuchenden Bauteiles mit einem hierauf abgeschiedenen Pulver (P), so daß die Oberfläche des Bauteiles teilweise freiliegt;
Erwärmen des Oberflächenbereiches des Bauteiles durch eine Hochfrequenz-Induktionsheizung (8);
Messen der Temperaturverteilung auf der Oberfläche des erhitzten, mit dem Pulver bedeckten Bauteiles unter Verwendung eines Strahlungsthermometers (9); und
Erkennen der Fehlerstellen an dem Bauteil abhängig von der Temperaturverteilung auf der Oberfläche des Bauteiles gemäß der Summe der Energieabgabe von Partikeln des Pulvers, welche die Oberfläche bedecken und der Energiereflektion von der Oberfläche, welche zwischen den Partikeln freiliegt.

2. Das Verfahren nach Anspruch 1, wobei die Dicke des Pulvers, welche die Bedeckung des Bauteiles (W) bildet, annähernd 1/6 bis 1/3 des Partikeldurchmessers beträgt, wenn angenommen wird, daß die Schicht des abgeschiedenen Pulvers so ausgeglichen wird, daß sie gleichmäßige Dicke hat.

3. Das Verfahren nach Anspruch 1 oder 2, wobei die Oberfläche des Bauteiles (W) als teilweise freiliegend in Form von verteilten Flecken beobachtet wird, wenn die Oberfläche mikroskopisch untersucht wird.

4. Das Verfahren nach einem der Ansprüche 1 bis 3, wobei die Temperaturverteilung auf der Oberfläche mit dem Strahlungsthermometer (9) an der Stelle gemessen wird, wo die Hochfrequenz-Induktionsheizung (8) durchgeführt wird.

5. Eine Vorrichtung zum Erkennen von Fehlerstellen auf der Oberfläche eines zu untersuchenden Bauteiles (W) mit:
einer Transportstrecke zum Transportieren des zu untersuchenden Bauteiles;
einer Pulver-Abscheidevorrichtung (2), die an der Transportstrecke angeordnet ist, um die Oberfläche des Bauteiles mit Pulver (P) zu bedecken;
einer Hochfrequenz-Induktionsheizvorrichtung (8), die an der Transportstrecke angeordnet ist, um den Oberflächenbereich des Bauteiles zu erhitzen;
einem Strahlungsthermometer (9) zum Messen der Temperaturverteilung an der Oberfläche des mit dem Pulver bedeckten, erhitzten Bauteiles; und
einer Erkennungsvorrichtung (10) zum Erkennen von Fehlerstellen auf dem Bauteil abhängig der Temperaturverteilung auf der Oberfläche des mit dem Pulver bedeckten erhitzten Bauteiles;
wobei die Pulver-Abscheidevorrichtung (2) Pulver auf der Oberfläche des Bauteiles so abscheidet, daß die Oberfläche des Bauteiles (W) teilweise freiliegt; und
wobei die Erkennungsvorrichtung (10) Fehlerstellen auf dem Bauteil gemäß der Summe der Energieemission von Partikeln des Pulvers, welche die Oberfläche bedecken und der Energiereflektion von der Oberfläche, welche zwischen den Partikeln freiliegt, unter Verwendung des Strahlungsthermometers (9) erkennt.

6. Die Vorrichtung nach Anspruch 5, wobei die Pulver-Abscheidevorrichtung (2) das Pulver (P) auf der Oberfläche des Bauteiles (W) so abscheidet, daß die Dicke des Pulverüberzugs an dem Bauteil annähernd 1/6 bis 1/3 des Partikeldurchmessers beträgt, wenn angenommen wird, daß die Schicht des abgeschiedenen Pulvers so ausgeglichen wird, daß sie gleichmäßige Dicke hat.

7. Die Vorrichtung nach Anspruch 5 oder 6, wobei die Hochfrequenz-Induktionsheizungsvorrichtung (8) mit einer Heizspule (8) ausgestattet ist, in welche das Bauteil eingeführt wird, wobei die Heizspule (8) einen Hohlraum (8a) hat, der durch diese hindurch von der Innenseite zur Außenseite ausgebildet ist und wobei das Strahlungsthermometer (9) die Temperaturverteilung auf der Oberfläche des Bauteiles in der Heizspule (8) durch den Hohlraum (8a) mißt.

8. Die Vorrichtung nach Anspruch 5 oder 6, wobei die Hochfrequenz-Induktionsheizungsvorrichtung (8) mit einer Heizspule (8) ausgestattet ist, in welche das Bauteil (W) eingeführt wird, wobei das Strahlungsthermometer (9) die Temperaturverteilung auf der Oberfläche des Bauteiles in der Heizspule (8) aus einer schrägen Richtung durch einen Spalt zwischen der Heizspule (8) und dem hierin eingeführten Bauteil (W) mißt.

## Revendications

1. Une méthode de détection des défauts à la surface d'un organe (W) à inspecter, comprenant les étapes consistant à:
couvrir la surface dudit organe à inspecter par de la poudre (P) déposée sur lui de manière que ladite surface de l'organe soit partiellement exposée;
chauffer la zone de surface dudit organe par un chauffage à induction à haute fréquence (8);
mesurer la distribution de la température sur ladite surface dudit organe chauffé, recouvert de ladite poudre, par utilisation d'un thermomètre à rayonnement (9); et
mesurer les défauts sur ledit organe selon la distribution de température se manifestant sur ladite surface de l'organe, en fonction de la somme d'émission d'énergie issue des particules de ladite poudre couvrant ladite surface et de la réflexion d'énergie issue de ladite surface exposée entre lesdites particules.

2. La méthode selon la revendication 1, dans laquelle l'épaisseur de couverture par de la poudre sur ledit organe (W) est d'environ 1/6 à 1/3 du diamètre des particules, si la couche de poudre déposée est supposée être nivelée comme si elle avait une épaisseur uniforme.

3. La méthode selon la revendication 1 ou 2, dans laquelle la surface de l'organe (W) est observée comme étant partiellement exposée sous une forme de points dispersés lorsque ladite surface est soumise à une observation microscopique.

4. La méthode selon l'une quelconque des revendications 1 à 3, dans laquelle ladite distribution de températures sur ladite surface est mesurée à l'aide dudit thermomètre à rayonnement (9) à l'emplacement auquel ledit chauffage à induction à haute fréquence (8) a été effectué.

5. Un dispositif de détection des défauts à la surface d'un organe (W) à inspecter, comprenant :
une ligne de transport destinée à transporter l'organe à inspecter;
un dispositif de déposition de poudre (2) monté sur ladite ligne de transport pour couvrir la surface dudit organe par de la poudre (P);
un dispositif de chauffage à induction à haute fréquence (8) monté sur ladite ligne de transport pour chauffer la zone de surface dudit organe;
un thermomètre à rayonnement (9) destiné à mesurer la distribution de la température sur ladite surface de l'organe chauffé couvert par ladite poudre; et
un dispositif de mesure (10) destiné à mesurer les défauts sur ledit organe selon la distribution de température se manifestant sur ladite surface dudit organe chauffé couvert par ladite poudre;
dans lequel ledit dispositif de déposition de poudre (2) dépose de la poudre sur la surface dudit organe, de manière que ladite surface de l'organe (W) soit partiellement exposée;
et dans lequel ledit dispositif de détection (10) mesure les défauts sur ledit organe, en fonction de la somme de l'émission d'énergie issue des particules de ladite poudre couvrant ladite surface et de la réflexion d'énergie issue de ladite surface exposée entre lesdites particules, par utilisation dudit thermomètre à rayonnement (9).

6. Le dispositif selon la revendication 5, dans lequel ledit dispositif de déposition de poudre (2) dépose ladite poudre (P) sur ladite surface dudit organe (W) de manière que l'épaisseur de couverture de poudre appliquée sur ledit organe soit d'environ 1/6 à 1/3 diamètre de particules si la couche de la poudre déposée est considérée comme étant nivelée comme ayant une épaisseur uniforme.

7. Le dispositif selon la revendication 5 ou 6, dans lequel ledit dispositif de chauffage à induction à haute fréquence (8) est équipé d'une bobine de chauffage (8) dans laquelle ledit organe est inséré, dans lequel ladite bobine de chauffage (8) a une cavité (8a) formée à travers elle, allant de sa partie intérieure à sa partie extérieure, et dans lequel ledit thermomètre à rayonnement (9) mesure la distribution de température sur ladite surface de l'organe dans ladite bobine de chauffage (8) par ladite cavité (8a).

8. Le dispositif selon la revendication 5 ou 6, dans lequel ledit dispositif de chauffage à induction à haute fréquence (8) est équipé d'une bobine de chauffage (8) dans laquelle ledit organe (W) est inséré et dans lequel ledit thermomètre à rayonnement (9) mesure la distribution de température sur ladite surface de l'organe dans ladite bobine de chauffage (8) depuis une direction inclinée, en passant par l'intervalle existant entre ladite bobine de chauffage (8) et ledit organe (W) inséré à travers elle.
